# EUROPEAN PATENT APPLICATION

(11) **EP 4 474 407 A1**
(43) Date of publication of application: **11.12.2024**
(21) Application number: 24175587.5
(22) Date of filing: 14.05.2024
(51) Int. Cl.: C08G 73/06, C08L 61/14, C08L 77/04, C08G 8/28

(54) **PHENOLIC TRIAZINE SILICON POLYMER RESIN BLENDS**

(30) Priority: 09.06.2023 GB 202308641
(71) Applicant: Rolls-Royce plc, London N1 9FX (GB)
(72) Inventor: Fielden-Stewart, Zoe, Derby, DE24 8BJ (GB); Hamerton, Ian, Derby, DE24 8BJ (GB); Norris, Chris, Derby, DE24 8BJ (GB)
(74) Representative: Rolls-Royce plc

(57) **Abstract**

A resin composition that is useful in the preparation of protective coatings. The resin composition comprises a polyfunctional cyanate ester, a phenol-end-modified PDMS oligomer, and an imidazolium dicyanamide catalyst.

## Description

### FIELD

The present invention concerns resin-based compositions and blends and their use in preparing protective coatings and composite materials. More specifically, it relates to phenolic triazine silicon polymer-based compositions and blends that are useful in the preparation of icephobic and/or corrosion-resistant coatings or composite materials for aerospace applications.

### BACKGROUND

Certain aerospace components, such as fan blades, are commonly formed from advanced composite materials as they provide the necessary relative stiffness and strength whilst minimising weight thereby minimising specific fuel consumption. Such composite materials often include organic matrix resin systems.

Composite materials typically comprise organic matrices and the chemical composition of a given organic matrix typically dictates the chemical and physical properties of the composite material that are desired for its intended use.

Commercially available composite materials often comprise epoxy resin-based organic matrices. However, epoxy resin-based materials typically have limited temperature ranges for safe and effective use. There is therefore a need for novel composite materials that can sustain the high temperatures for prolonged periods of times. The need is especially acute in the aerospace industry, for example in the construction of components such as the turbine blades of gas turbine engine.

Aerospace components can be worn and damaged by icing and erosion. The accretion of ice can change the aerodynamic characteristics of aerospace components and in some instances pose a risk to flight safety. Erosion can cause material loss to aerospace components and require them to be prematurely replaced to maintain safety, performance, and fuel economy.

Unites States patent application US 2022/0289965 A1 discloses a resin composition that comprises a polyfunctional cyanate ester, a phenol-end-modified polydimethylsiloxane (PDMS) oligomer, and a catalyst. The resin composition can be cured to provide a resin blend that is useful in the preparation of icephobic and/or corrosion-resistant coatings or composite materials for aerospace applications. US 2022/0289965 A1 discloses the use of Cu^{II}(AcAc)₂ *i.e.* bis(acetylacetonato)-copper(ll) or copper acetylacetonate as a suitable catalyst.

It is desirable to provide improved coating compositions and protective coatings that are suitable for use in the protection and/or manufacture of aerospace components, or at least provide useful alternatives to known coating compositions and protective coatings.

It has now been found that the choice of catalyst in the formulation of such resin compositions can improve certain properties of resin blends, coatings and composite materials made from the resin compositions.

### SUMMARY

The present invention provides a resin composition, a resin blend, a composite material, a component, a method of preparing a resin blend, and a method of preparing a composite material, as set out in the appended claims.

In a first aspect the present invention provides a resin composition comprising: (a) a polyfunctional cyanate ester; (b) a phenol-end-modified PDMS oligomer; and (c) a catalyst, wherein the catalyst is an imidazolium dicyanamide.

In some embodiments the polyfunctional cyanate ester has a glass-transition temperature, when cured, from 300 °C to 500°C, measured by Dynamic Mechanical Analysis.

In some embodiments the polyfunctional cyanate ester has a glass-transition temperature, when cured, from 380 °C to 420 °C, measured by Dynamic Mechanical Analysis.

In some embodiments the polyfunctional cyanate ester is a novolac cyanate ester.

In some embodiments the polyfunctional cyanate ester is an oligomer of formula I: 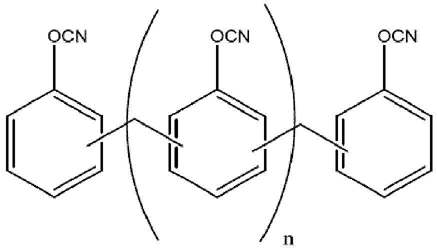 where n is 1, 2 or 3.

In some embodiments the polyfunctional cyanate ester has a molecular weight from 300 g/mol to 500 g/mol.

In some embodiments the phenol-end-modified PDMS oligomer is a compound of formula II: 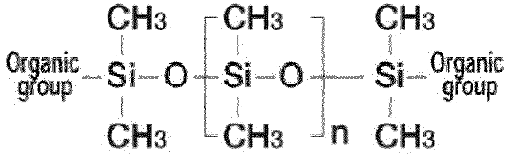 where Organic group is a phenol group and n is from 30 to 100.

In some embodiments the phenol-end-modified PDMS oligomer is a compound of formula III:

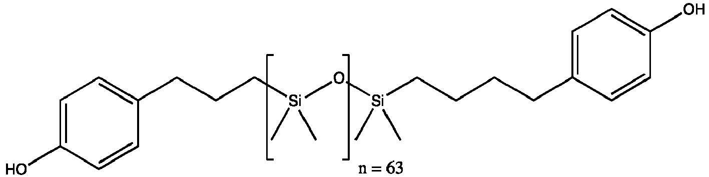

In some embodiments the catalyst is an imidazolium dicyanamide in the form of an ionic liquid (IL)

In some embodiments the catalyst is 1-ethyl-3-methylimidazolium dicyanamide.

In some embodiments the catalyst is 1-ethyl-3-methylimidazolium dicyanamide in the form of an ionic liquid (IL).

In a second aspect the present invention provides a resin blend comprising a cured resin composition of the first aspect.

In a third aspect the present invention provides a composite material comprising an organic matrix that comprises a resin blend of the second aspect.

In a fourth aspect the present invention provides a component coated with a resin blend of the second aspect or formed from a composite material of the third aspect. The component may be an aerospace component such as a gas turbine or hybrid electric engine component.

In a fifth aspect the present invention provides a method of preparing a resin blend of the second aspect, the method comprising the steps of: (i) mixing a polyfunctional cyanate ester, a phenol-end-modified PDMS oligomer; and an imidazolium dicyanamide catalyst to form a resin composition of the first aspect; and (ii) curing the resin composition to form the resin blend of the second aspect.

In a sixth aspect the present invention provides a method of preparing a composite material of third aspect, the method comprising the steps of: forming a stack of successive layers of a resin blend of the second aspect and a reinforcing material; and curing the stack of layers to form a composite material of the third aspect.

The term "cyanate ester" as used herein means a molecule in which the hydrogen atom of a phenolic OH group has been substituted with a cyanide (-C=N) group.

The term "polyfunctional cyanate ester" as used herein means a cyanate ester that comprises more than one cyanide groups.

The term "PDMS" as used herein means polydimethylsiloxane *i.e.* belonging to a group of polymeric organosilicon compounds that are commonly referred to as silicones.

The term "PDMS oligomer" as used herein means an oligomer of polydimethylsiloxane.

The term "phenol-end-modified PDMS oligomer" as used herein means a polydimethylsiloxane oligomer that has been modified to have phenol groups on each end.

The term "percentage moisture uptake" as used herein means the difference between a final moisture content in a substance and an initial moisture content in the substance expressed as a percentage. The percentage moisture uptake can be determined by simple gravimetric methods to determine the mass of water absorbed, although spectral methods (e.g. Raman spectroscopy or Fourier transform infrared spectroscopy) may be used or more dedicated techniques such as the Karl Fischer titration method.

Other than in the operating examples, or where otherwise indicated, all numbers expressing quantities of ingredients used herein are to be understood as modified in all instances by the term "about".

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

The present invention will now be described by way of example only, with reference to the Figures, in which:

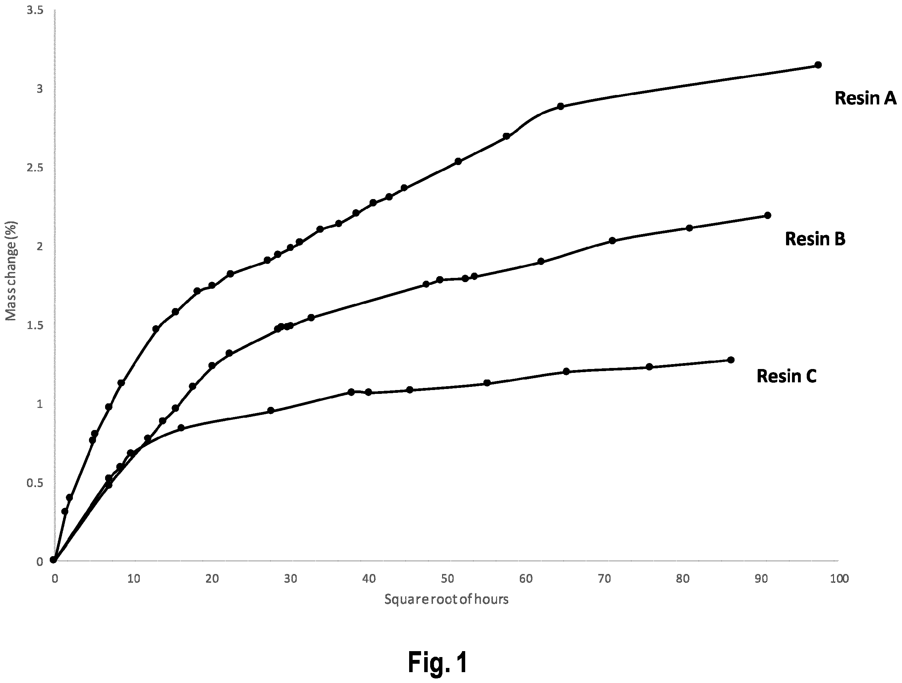

FIG. 1 is a graph that shows the mass change (%) vs. square root hours for samples of (A) PRIMASET^{®} PT-30 (a known polyfunctional cyanate ester), (B) a known blend of PRIMASET^{®} PT-30 and KF-2201 (a known phenol-end-modified PDMS oligomer) catalysed by Cu^{II}(AcAc)₂, and (C) a blend of composition of PRIMASET^{®} PT-30 and KF-2201 catalysed by 1-ethyl-3-methylimidazolium dicyanamide in the form of an ionic liquid (IL).

### DETAILED DESCRIPTION

Aspects and embodiments of the present invention will now be discussed with reference to the accompanying drawings. Further aspects and embodiments will be apparent to those skilled in the art.

The present invention concerns resin-based compositions and blends and their use in preparing protective coatings and composite materials. More specifically, it relates to phenolic triazine silicon polymer-based compositions and blends that are useful in the preparation of icephobic and/or corrosion-resistant coatings or composite materials for aerospace applications.

Resin compositions of the present invention may be cured to form resin blends which can be used as a matrix in composite materials. The present invention also provides components that are coated with a resin blend of the present invention or are formed from a composite material of the present invention.

Resin blends and composite materials of the present invention can withstand high temperatures, for example up to about 200 °C and even up to about 400 °C. This makes them especially suitable for aerospace applications. Resins blends of the present invention are useful as environmental protective coatings e.g. applied to aerospace components, for example gas turbine and hybrid electric engine components such as fan blades. They have been found to be icephobic and erosion resistant. These useful properties are also exhibited by aerospace components that are formed composite materials of the present invention.

In broad terms the present invention provides a resin composition comprising: (a) a polyfunctional cyanate ester; (b) a phenol-end-modified PDMS oligomer; and (c) a catalyst that is an imidazolium dicyanamide.

Each component of this composition will now be described in turn.

### Polyfunctional cyanate ester

The resin composition of the present invention includes a polyfunctional cyanate ester.

As used herein, the term "cyanate ester" refers to a molecule in which the hydrogen atom of a phenolic OH group has been substituted with a cyanide (-C=N) group. A "polyfunctional cyanate ester" is a cyanate ester which comprises more than one cyanide groups.

Any suitable polyfunctional cyanate ester may be used. For example, the polyfunctional cyanate ester may have a glass-transition temperature equal to or greater than about 300 °C, when cured. For example, the polyfunctional cyanate ester may have a glass-transition temperature equal to or greater than about 310 °C, for example equal to or greater than about 320 °C, for example equal to or greater than about 330 °C, for example equal to or greater than about 340 °C, for example equal to or greater than about 350 °C, for example equal to or greater than about 360 °C, for example equal to or greater than about 370 °C, for example equal to or greater than about 380 °C, when cured. For example, the polyfunctional cyanate ester may have a glass-transition temperature equal to or less than about 500 °C, for example equal to or less than about 490 °C, for example equal to or less than about 480 °C, for example equal to or less than about 470 °C, for example equal to or less than about 460 °C, for example equal to or less than about 450 °C, for example equal to or less than about 440 °C, for example equal to or less than about 430 °C, for example equal to or less than about 420 °C, for example equal to or less than about 410 °C, for example equal to or less than about 400 °C, when cured. For example, the polyfunctional cyanate ester may have a glass-transition temperature ranging from about 300 °C to about 500 °C or from about 350 °C to about 450 °C or from about 380 °C to about 420 °C or from about 380 °C to about 400 °C, when cured. This refers to the glass-transition temperature of the polyfunctional cyanate ester when cured alone (i.e. without the other components in the resin blend).

Glass transition temperature may, for example, be measured by Dynamic Mechanical Analysis (DMA), for example according to ASTM D4065-12 or D5279-13.

The polyfunctional cyanate ester may, for example, be one of the polyfunctional cyanate esters disclosed in Chemistry and Technology of Cyanate Ester Resins (I Hamerton, Ed.) Blackie Academic and Professional: Glasgow, 1994, pp. 34-43, the contents of which is incorporated herein by reference.

The polyfunctional cyanate ester may, for example, be a novolac cyanate ester including those described in the aforementioned article.

Novolacs are polymers derived from phenol derivatives and formaldehyde such that the phenolic units are linked by methylene and/or ethylene groups in the ortho and/or para positions. The phenol derivative may, for example, be phenol or methylphenol. The ratio of formaldehyde to phenol derivative may, for example, be less than one. The novolac may, for example, comprise from about 10 to about 20 phenolic units.

Novolac cyanate esters are novolacs in which one or more hydrogen atom(s) of one or more phenolic OH group(s) are substituted with a cyanide (-C=N) group. For example, the novolac cyanate ester may be a novolac in which the hydrogen atoms of two or more phenolic OH groups have been substituted with cyanide (-C=N) groups. For example, the novolac cyanate ester may be a novolac in which all of the hydrogen atoms of the phenolic OH groups have been substituted with cyanide (-C=N) groups.

The polyfunctional cyanate ester may, for example, be an oligomer of formula I below: 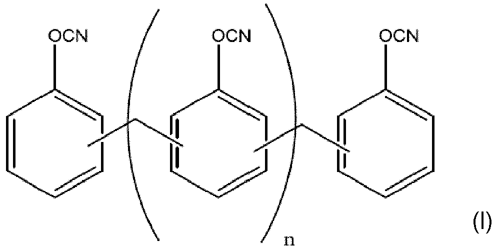 where n is 1, 2 or 3.

The polyfunctional cyanate ester of formula II may, for example, have a molecular weight ranging from about 300 g/mol to about 500 g/mol, for example from about 350 g/mol to about 450 g/mol, for example from about 360 to about 400 g/mol.

The polyfunctional cyanate ester may, for example, be the material referred to as PRIMASET^{®} PT-30 supplied by Arxada AG (formerly part of Lonza Group) or the material referred to as AroCy^{®} XU-371 novolac-based cyanate ester supplied by Huntsman Advanced Materials LLC.

In some embodiments, the polyfunctional cyanate ester is present in an amount of 85 to 99 parts by weight, for example 90 to 96 parts by weight, or for example about 94 parts by weight.

### Phenol-end-modified PDMS oligomer

The protective coating composition of the present invention includes a phenol-end-modified polydimethylsiloxane (PDMS) oligomer. Siloxanes have a low erosion yield that significantly retards erosion to underlying layers of material.

In some embodiments the phenol-end-modified PDMS oligomer is a polymeric organosilicon compound. Such compounds are commonly referred to as silicones.

"Phenol-end-modified" refers to the fact that the oligomer chain includes phenol groups (6 membered aromatic carbon ring with OH group) on each end. It is understood that the hydroxyl groups allow bonding of the oligomer to the cyanate ester polymer. The flexibility of the oligomer section allows an increase in toughness of the overall system, due to being able to yield upon load.

In some embodiments the phenol-end-modified PDMS oligomer is a compound of formula II: 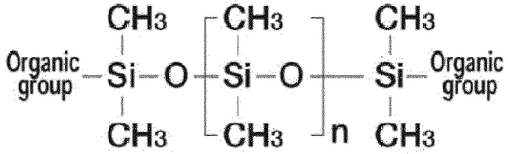 where Organic group is a phenol group and n is an integer from 30 to 100, for example from 40 to 90, or for example from 50 to 80.

In some embodiments the phenol-end-modified PDMS oligomer is a phenol-modified silicone fluid referred to as KF-2201 and supplied by Shin-Etsu Chemical Co., Ltd. and having the formula III:

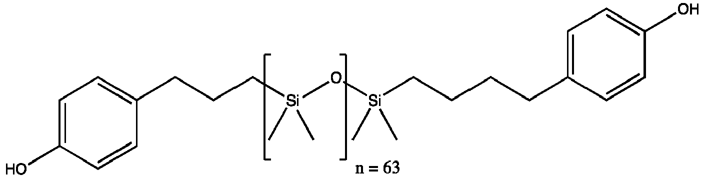

In some embodiments, the phenol-end-modified PDMS oligomer is present in an amount of 1 to 15 parts by weight, for example 4 to 10 parts by weight, or for example about 6 parts by weight.

### Catalyst

The present invention provides a resin composition comprising: (a) a polyfunctional cyanate ester; (b) a phenol-end-modified PDMS oligomer; and (c) a catalyst that is an imidazolium dicyanamide.

The catalyst catalyses the polymerisation of the polyfunctional cyanate ester and the phenol-end-modified PDMS oligomer of the resin composition, i.e. by lowering the cure initiation temperature.

As mentioned above, US 2022/0289965 A1 discloses the use of Cu^{II}(AcAc)₂ *i.e. bis*(acetylacetonato)-copper(II) or copper acetylacetonate as a catalyst in resin compositions of polyfunctional cyanate esters and the phenol-end-modified PDMS oligomers. The present invention involves using an imidazolium dicyanamide to catalyse the polymerisation of polyfunctional cyanate esters and the phenol-end-modified PDMS oligomers and the choice of such a catalyst has been found to significantly reduce the percentage moisture uptake in the resulting blend.

The imidazolium dicyanamide catalyst can take many forms suitable for the required purpose.

In some embodiments the catalyst is an imidazolium dicyanamide in the form of an ionic liquid (IL).

In some embodiments the catalyst is 1-ethyl-3-methylimidazolium dicyanamide, which is commercially available from BASF AG.

In some embodiments the catalyst is 1-ethyl-3-methylimidazolium dicyanamide in the form of an ionic liquid (IL).

It has been found that the use of the imidazolium dicyanamide, more particularly 1-ethyl-3-methylimidazolium dicyanamide, in the form of an ionic liquid (IL), introduced as an initiator, significantly reduced the percentage moisture uptake in phenolic triazine-silicone polymer blends of a polyfunctional cyanate ester and a phenol-end-modified PDMS oligomer, more particularly PRIMASET^{®} PT-30 supplied by Arxada AG and KF-2201 supplied by Shin-Etsu.

As mentioned above, the term "percentage moisture uptake" as used herein means the difference between a final moisture content in a substance and an initial moisture content in the substance expressed as a percentage.

Reducing the percentage moisture uptake in cured phenolic triazine-silicone polymer blends is useful as this minimises the reduction in glass transition temperature that results from plasticization of the polymer network, so limiting the operational temperature. Furthermore, in the intended use for these blends as protective coatings for components, especially aerospace components, reducing the presence of moisture, will reduce ice build-up and thus limit erosion damage.

The resin composition includes the catalyst in an amount that is suitable for the purpose.

In certain embodiments the resin composition includes from 0.05 wt% to 3 wt% of an imidazolium dicyanamide catalyst, for example from 0.1 wt% to 1.5 wt%, or for example from 0.1 wt% to 1 wt%

Without being bound to theory, it is thought that the introduction of the catalyst as an ionic liquid leads to a more satisfactory dispersion of the catalyst, leading to fewer localised concentrations and reducing the potential for uncontrolled exotherms.

Deng et al. (Qinghua Zhang, Xiangyuan Ma, Shimin Liu, Benqun Yang, Liujin Lu, Yude He and Youquan Deng, Hydrophobic 1-allyl-3-alkylimidazolium dicyanamide ionic liquids with low densities, J. Mater. Chem., 2011, 21, 6864) report that similarly substituted ILs, albeit where the imidazolium cation contains slightly longer alkyl substituents (R = C6 - C14) display significant hydrophobicity.

### Resin blend

The present invention also provides a resin blend that comprises a cured from of the resin composition of the present invention.

The curing process can be performed by any art known curing method. Such methods may include autoclaving, hot pressing, or liquid moulding.

The resin composition of the present invention can be formulated to fine-tune one or more properties of the resin blend produced by curing the resin composition. Such properties may include, for example, the process ability/fluidity/viscosity prior to curing, thermo-mechanical properties (*e*.*g*., glass-transition temperature), thermal and thermos-oxidative stability, reactivity, and flame retardancy moisture absorption, icephobicity, and/or erosion performance.

The resin blend of the present invention is useful for coating components, *e*.*g*., aerospace components, to protect them from environmental stresses such as icing and erosion.

The performance and integrity of aerospace components can be detrimentally affected by ice forming on them or by ice particles scraping their surfaces. While many aerospace components can be exposed to high temperatures in use, at least certain aerospace components can be exposed to ice when not in use and/or when in use. Electrical de-icing heaters can be provided to avoid or minimise aerospace components icing however they are typically energy- intensive, add complexity to aerospace subsystems components, and increase the weight of the overall aircraft thus increasing specific fuel consumption (SFC).

The resin blend of the present invention can be useful as an icephobic coating *i.e.,* a coating that can repel water droplets, delay ice nucleation and/or reduce ice adhesion. As such it can slow the build-up of ice on components coated same, facilitate ice to be shed from such components, reduce the amount of energy required to remove ice through reduction of electrical heaters required, and reduce the complexity/weight of systems otherwise used to address ice accretion.

As the resin blend of the present invention is cyanate ester resin-based, it is compatible with other cyanate ester resin-based composite fibre reinforced polymers commonly used in the aerospace industry.

The resin blend of the present invention may be used to encapsulate an electrical ice protection system. Electrically resistive materials (e.g., carbon nanotubes or carbon veils) may be embedded in the resin composition and therefore incorporated in the resin blend formed by curing that resin composition to act as electrical heating elements to actively increase the surface temperature of the aerospace component the resin blend has been coated.

### Composite material

The present invention also provides a composite material that comprising an organic matrix that comprises a resin blend of the present invention.

As used herein, a "composite material" is a material comprising two or more different materials that remain separate and distinct in the composite material, where the two or more different materials have different chemical and/or physical properties such that, when combined, produce a material that has properties different from the individual components. Thus, one component of the composite material disclosed herein is a resin blend of the present invention.

Another or the component of the composite material may be a reinforcing material. The reinforcing material may be any suitable material for the purpose. For example, the reinforcing material glass may be glass fibres, carbon fibres, a mixture of the two, or a nanomaterial.

Composite materials are especially useful in aerospace applications as they typically offer cost and weight savings.

The present invention provides a method for making a composite material of the present invention. In broad terms the method comprises the steps of forming a stack of successive layers of a resin blend of the present invention and a reinforcing material; and curing the stack of layers to form the desired composite material.

The composite material may, for example, have one or more of the properties such as glass transition temperature, thermal stability and/or moisture uptake described herein in relation to the resin blend.

Any methods known to persons skilled in the art may be used to form the composite materials disclosed herein such as hot melt pre-pregging methods, filament winding methods, and resin transfer moulding (RTM) methods.

### Component

The present invention also provides a component that is coated with a resin blend of the present invention or is formed from the composite material of the present invention.

The component may take many forms. In general, it can be any component that may benefit from being coated with a resin blend of the present invention or formed from the composite material of the present invention.

The component may, for example, be an aerospace component such as a gas turbine or hybrid electric engine component, *e.g*. a fan blade.

Components of the fan area in a gas turbine can be manufactured by composite materials. Composite materials like high temperature organic matrix reinforced composites with time can absorb moisture or come in contact with jet fuel, turbine oil and salt that can reduce their performance. In addition, these materials suffer from erosion that can lead to material loss and may adversely influence the lifecycle of the structure.

Additionally, the accretion of ice can change aerodynamic characteristics, greatly affecting the flight safety.

### Method of preparing a resin blend

The present invention also provides a method of preparing the aforementioned resin blend. The method comprises the steps of: (i) mixing a polyfunctional cyanate ester, a phenol-end-modified PDMS oligomer; and an imidazolium dicyanamide catalyst to form a resin composition of the present invention; and (ii) curing the resin composition to form the resin blend of the present invention.

Step (i) of the method involves mixing a polyfunctional cyanate ester, a phenol-end-modified PDMS oligomer; and an imidazolium dicyanamide catalyst to form a resin composition of the present invention.

In that step the polyfunctional cyanate ester, the phenol-end-modified PDMS oligomer and the imidazolium dicyanamide catalyst may be any of those described above.

The mixing can be performed by any art known mixing method.

In some embodiments the resin composition is partially cured to prevent or minimise phase separation during the curing step. For example, a 1:1 wt.% ratio of polyfunctional cyanate ester: to PDMS and initially prepared and mixed at 120°C for 40 minutes. Once mixed, remaining polyfunctional cyanate ester is added with the catalyst and stirred for another 40 minutes at 100 °C. The mixture is then degassed, e.g. under vacuum at 90 °C for 30 minutes or until there are no visual bubbles in the mixture. The degassing serves to remove entrapped air before the curing step to prevent or at least minimise the formation voids in the cured product.

Step (ii) of the method involves curing the resin composition formed in step (i) to form the resin blend of the present invention.

In that step the curing process can be performed by any art known curing method suitable for the purpose.

For example, the curing is performed at an elevated temperature, e.g. from 80 °C to 120 °C, from 90 °C to 100 °C, from 95 °C to 105 °C, or about 100 °C. The curing is performed for a sufficient time to form the resin blend, for example for 30 to 80 minutes, for 30 to 60 minutes, for 35 to 45 minutes, or for about 40 minutes.

An additional or post curing step may be is performed to increase the thermal stability of the resin blend.

### Method of preparing a composite material

The present invention also provides a method of preparing a composite material of the present invention. The method comprises the steps of: (i) forming a stack of successive layers of a resin blend of the present invention and a reinforcing material; and (ii) curing the stack of layers to form a composite material of the present invention.

Step (i) of the method involves forming a stack of successive layers of a resin blend of the present invention and a reinforcing material. The reinforcing material may be any suitable material for the purpose. For example, the reinforcing material glass may be glass fibres or a nanomaterial.

The stack may be formed by heating the resin blend and spreading it on a first layer of release film, applying a layer of reinforcing material on top of the resin blend layer, placing a second layer of release film on top of the layer of reinforcing material to form a single pre-impregnated (prepreg) ply, and repeating these steps as necessary to obtain a desired number of prepreg plies, removing the release layers, and successively layers of resin blend and reinforcing material.

Step (ii) of the method involves curing the stack of layers to form a composite material of the present invention.

In that step the curing process can be performed by any art known curing method suitable for the purpose. Such methods may include autoclaving, hot pressing or liquid moulding.

### EXAMPLES

The follow examples are provided to illustrate embodiments of the resin composition and resin blend of the present invention.

### Example 1

### Preparation of a resin composition and its use in the preparation of an icephobic/erosion-resistant resin blend

A resin composition of the present invention comprises:
(a) 94 parts by weight PRIMASET^{®} PT-30 polyfunctional cyanate ester supplied by Arxada AG): 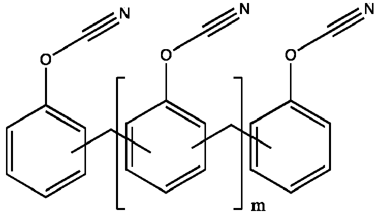
(b) 6 parts by weight of a KF-2201 phenol-end-modified PDMS oligomer supplied by Shin-Etsu Chemical Co. Ltd: 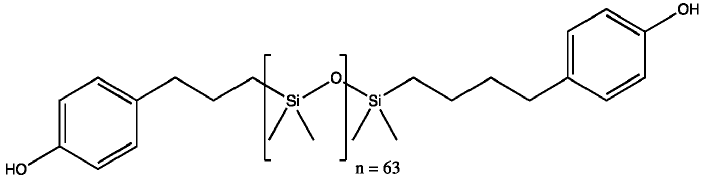 and
(c) 1 wt% of 1-ethyl-3-methylimidazolium dicyanamide in the form of an ionic liquid as a catalyst.

Such a resin composition of the present invention was prepared and cured as follows to form a resin blend of the present invention:
**Step (i):** 6 parts by weight of PRIMASET^{®} PT-30 polyfunctional cyanate ester (supplied by Arxada AG): and 6 parts by weight of KF-2201 phenol-end-modified PDMS oligomer (supplied by Shin-Etsu Chemical Co. Ltd) was mixed to form a 1:1 wt.% ratio, through stirring at 120°C for 40 minutes. This step is performed in order to partially cure the material to prevent or minimise phase separation of the two materials during the curing step.
**Step (ii):** The remaining PRIMASET^{®} PT-30 polyfunctional cyanate ester was added to the mixture to achieve a 94:6 wt.% ratio formulation. The imidazolium dicyanamide catalyst, 1-ethyl-3-methylimidazolium dicyanamide (supplied by BASF AG) in the form of an ionic liquid was added to the mixture with stirring at 100°C for 40 minutes.
**Step (iii):** The mixture was then degassed under full vacuum at 90°C for 30 minutes in order to remove entrapped air before the curing step to prevent void formation.
**Step (iv):** The resin was then cured in a borosilicate glass mould using the following cure cycle: 160°C for 1 hour and 200°C for 1 hour, to produce a cured neat-resin sample. A higher temperature post-cure from 200 to 260 °C may be included after the second cure temperature to increase the glass transition temperature of the cure material if required.

Note: The resulting resin blend after step (iii) may be cured as neat resin, cast into a film for prepreg manufacture using fibrous reinforcement for composite manufacture or stored in a refrigerator at 3 to 5°C for up to 7 days. Longer-term storage is possible using a freezer.

### Example 2

### Comparison of moisture intake in resin blends

Three resin samples were prepared from the following compositions.

### Resin composition A:

100 wt% of PRIMASET^{®} PT-30 polyfunctional cyanate ester supplied by Arxada AG:

### Resin composition B:

(a) 94 parts by weight of PRIMASET^{®} PT-30 polyfunctional cyanate ester supplied by Arxada AG;
(b) 6 parts by weight of KF-2201 phenol-end-modified PDMS oligomer supplied by Shin-Etsu Chemical Co. Ltd); and
(c) 288 ppm of 1% Cu^{II}(AcAc)₂ in EPIKOTE^{™} Resin 828 epoxy resin as a catalyst.

### Resin composition C:

(a) 94 parts by weight of PRIMASET^{®} PT-30 polyfunctional cyanate ester supplied by Arxada AG;
(b) 6 parts by weight of KF-2201 phenol-end-modified PDMS oligomer supplied by Shin-Etsu Chemical Co. Ltd); and
(c) 1 wt% of 1-ethyl-3-methylimidazolium dicyanamide supplied by BASF AG in the form of an ionic liquid as a catalyst.

Cured samples of Resin A, Resin B and Resin C were dried and weighed, then fully immersed in distilled water and left at room temperature. The samples were then incrementally dried and weighed, with the change in mass (%) plotted against the square root of hours (FIG. 1). The corresponding data are also listed in Table 1.

These data show the use of ionic liquid (IL) 1-ethyl-3-methylimidazolium dicyanamide (originally supplied by BASF AG), introduced as an initiator, significantly reduced the % moisture uptake in the imidazolium dicyanamide catalysed phenolic triazine-silicone polymer blend of the present invention.

**Table 1 - Mass change vs. square root hours for Resin A (PT-30), Resin B (Cu-catalysed) and Resin C (ID-catalysed).**

| **Resin A** | | **Resin B** | | **Resin C** | |
|---|---|---|---|---|---|
| *Square root of hours* | *Mass change* (%) | *Square root of hours* | *Mass change* (%) | *Square root* o*f hours* | *Mass change* (%) |
| 0 | 0 | 0 | 0 | 0 | 0 |
| 1.414214 | 0.306812 | 6.928203 | 0.478185 | 6.928203 | 0.518512 |
| 2 | 0.393646 | 12 | 0.775097 | 8.485281 | 0.595769 |
| 5 | 0.764136 | 13.85641 | 0.886569 | 9.797959 | 0.68194 |
| 5.291503 | 0.804659 | 15.49193 | 0.967829 | 16.24808 | 0.837939 |
| 7 | 0.972537 | 17.66352 | 1.101179 | 27.71281 | 0.947881 |
| 8.544004 | 1.123049 | 20.19901 | 1.231404 | 37.94733 | 1.069709 |
| 13 | 1.464595 | 22.44994 | 1.311622 | 40.09988 | 1.065281 |
| 15.52417 | 1.580373 | 28.56571 | 1.46685 | 45.43127 | 1.081595 |
| 18.35756 | 1.707729 | 28.98275 | 1.481435 | 55.20869 | 1.123195 |
| 20.22375 | 1.742463 | 29.79933 | 1.482477 | 65.36054 | 1.197816 |
| 22.47221 | 1.817718 | 30.19934 | 1.490811 | 75.89466 | 1.226814 |
| 27.29469 | 1.904552 | 32.86335 | 1.543943 | 86.39444 | 1.274623 |
| 28.58321 | 1.945075 | 47.49737 | 1.753344 | | |
| 30.21589 | 1.985597 | 49.23413 | 1.781473 | | |
| 31.38471 | 2.02033 | 52.5357 | 1.792302 | | |
| 33.95585 | 2.101375 | 53.66563 | 1.802309 | | |
| 36.34556 | 2.141898 | 62.16108 | 1.897112 | | |
| 38.58756 | 2.205576 | 71.33022 | 2.031068 | | |
| 40.70626 | 2.269254 | 81.09254 | 2.112992 | | |
| 42.72002 | 2.309776 | 90.99451 | 2.190793 | | |
| 44.64303 | 2.361876 | | | | |
| 51.62364 | 2.535544 | | | | |
| 57.76677 | 2.691844 | | | | |
| 64.62971 | 2.882878 | | | | |
| 97.49359 | 3.143379 | | | | |

## Claims

1. A resin composition comprising:
(a) a polyfunctional cyanate ester;
(b) a phenol-end-modified polydimethylsiloxane (PDMS) oligomer; and
(c) a catalyst that is an imidazolium dicyanamide.

2. The resin composition of claim 1, wherein the polyfunctional cyanate ester has a glass-transition temperature, when cured, from 300 °C to 500°C, measured by Dynamic Mechanical Analysis.

3. The resin composition of claim 2, wherein the polyfunctional cyanate ester has a glass-transition temperature, when cured, from 380 °C to 420 °C, measured by Dynamic Mechanical Analysis.

4. The resin composition of any preceding claim, wherein the polyfunctional cyanate ester is a novolac cyanate ester.

5. The resin composition of any preceding claim, where the polyfunctional cyanate ester is an oligomer of formula I: 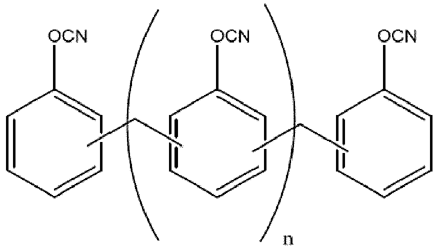 where n is 1, 2 or 3.

6. The resin composition of any preceding claim, wherein the polyfunctional cyanate ester has a molecular weight from 300 g/mol to 500 g/mol.

7. The resin composition of any preceding claim, wherein the phenol-end-modified PDMS oligomer is a compound of formula II: 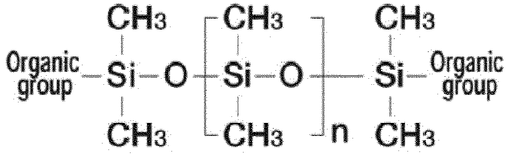 where Organic group is a phenol group and n is from 30 to 100.

8. The resin composition of any preceding claim, wherein the phenol-end-modified PDMS oligomer is a compound of formula III:

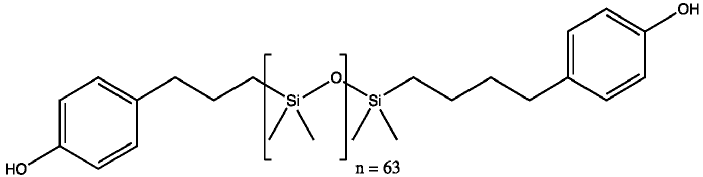

9. The resin composition of any preceding claim, where the catalyst is 1-ethyl-3-methylimidazolium dicyanamide.

10. The resin composition of any preceding claim, where the catalyst is 1-ethyl-3-methylimidazolium dicyanamide in the form of an ionic liquid.

11. A resin blend comprising a cured resin composition of any preceding claim.

12. A method of preparing a resin blend of claim 11, the method comprising the steps of:
mixing a polyfunctional cyanate ester, a phenol-end-modified PDMS oligomer; and an imidazolium dicyanamide catalyst to form a resin composition according to any one of claims 1 to 10; and
curing the resin composition to form the resin blend of claim 11.
